Europäisches Patentamt

European Patent Office

Office européen des brevets

(19)

(11) Numéro de publication: **0 217 701**
**B1**

(12) **FASCICULE DE BREVET EUROPEEN**

(45) Date de publication du fascicule du brevet: **16.01.91**

(21) Numéro de dépôt: **86401948.4**

(22) Date de dépôt: **05.09.86**

(51) Int. Cl.⁵: **C 08 K 3/36, C 08 L 21/00, C 01 B 33/193**

(54) **Procédé de renforcement d'élastomères par une charge siliceuse.**

(30) Priorité: **13.09.85 FR 8513579**

(43) Date de publication de la demande:
**08.04.87 Bulletin 87/15**

(45) Mention de la délivrance du brevet:
**16.01.91 Bulletin 91/03**

(84) Etats contractants désignés:
**AT BE CH DE FR GB IT LI LU NL SE**

(56) Documents cités:
**FR-A-2 041 655**
**FR-A-2 353 486**
**FR-A-2 567 505**

(73) Titulaire: **RHONE-POULENC CHIMIE**
**25, quai Paul Doumer**
**F-92408 Courbevoie Cédex (FR)**

(72) Inventeur: **Bomo, Francis**
**121 Cours du Docteur Long**
**F-69003 Lyon (FR)**
Inventeur: **Chevallier, Yvonick**
**Domaine du Champ Blanc 19, allée des Géraniums**
**F-69150 Decines (FR)**
Inventeur: **Lamy, Patrick**
**61, rue de Baraban**
**F-69003 Lyon (FR)**
Inventeur: **Morawski, Jean-Claude**
**10, rue des Primevères**
**F-69680 Chassieu (FR)**

(74) Mandataire: **Dubruc, Philippe et al**
**RHONE-POULENC INTERSERVICES Service Brevets Chimie 25, quai Paul-Doumer**
**F-92408 Courbevoie Cédex (FR)**

**Le dossier contient des informations techniques présentées postérieurement au dépôt de la demande et ne figurant pas dans le présent fascicule.**

Courier Press, Leamington Spa, England.

**Description**

La présente invention concerne le renforcement des élastomères naturels ou synthétiques par de la silice.

Les formules pour mélanges caoutchouc, dont l'élastomère constitue l'élément principal, sont très nombreuses compte-tenu des applications multiples auxquelles elle sont destinées; pneumatiques, semelles, câbles, joints, etc.

Ces formules comprennent généralement, outre l'élastomère, des charges dont l'un des rôles principaux est l'amélioration des propriétés mécaniques de l'élastomère.

Parmi ces charges, les noirs de carbone sont particulièrement employés.

Cependant, depuis plusieurs années on a cherché à remplace les noirs de carbone par des silices de précipitation plus écnomiques.

Toutefois, la substitution des silices aux noirs de carbone n'est pas une chose simple. En effet, les charges renforçantes doivent une partie de leurs propriétés à la morphologie de leurs agrégats. Cette morphologie étant différente entre les silices et les noirs, on conçoit dès lors que des différences importantes puissent apparaître pour les élastomères renforcés par l'un ou l'autre de ces types de charges.

Des silices de renforcement pour élastomères ont déjà été décrites dans les documents intercalaires EP—A—157 703 et EP—A—170 579.

Ces documents ne donnent aucune indication sur l'éventuelle existence de critères de sélection au niveau des surfaces CTAB et des aires projetées des silices à utiliser dans le but d'augmenter leur dispersibilité dans la matric élastomèrique.

Dès lors, la Demanderesse a entrepris de longues études pour déterminer les types de silices les plus aptes aux renforcements des élastomères et en particulier ceux présentant les propriétés renforçantes les plus proches de celles des noirs de carbone.

La Demanderesse a ainsi été conduite à rechercher des corrélations possibles entre les propriétés morphologiques des silices et les propriétés des élastomères renforcés avec de telles charges.

Selon l'objet principal de la présente demande, parmi les nombreuses silices existantes, la Demanderesse a sélectionné des silices dont l'application au renforcement des élastomères donne des résultats particulièrement intéressants.

Das ce but, la charge renforçante pour élastomère selon l'invention est caractérisée en ce qu'elle comprend au moins une silice de précipitation présentant les caractéristiques suivantes:

— une surface CTAB comprise entre 20 et 200 $m^2$/g;
— une aire projetée moyenne des agrégats supérieure à 10 000 $nm^2$;
— une prise d'huile DBP au plus de 300 ml/100 g;
— un volume inter-agrégat élevé d'au moins 1 $cm^3$/g et une population de pores inter-agrégat homogène;

avec les conditions suivantes:
— pour une surface CTAB comprise entre 20 et 70 $m^2$/g, une aire projetée d'au moins 30 000 $nm^2$.
— pour une surface CTAB comprise entre 70 et 120 $m^2$/g, une aire projetée d'au moins 25 00 $nm^2$.
— pour une surface CTAB comprise entre 120 et 200 $m^2$/g, une aire projetée d'au moins 15 00 $nm^2$.

Selon un mode de réalisation particulière de l'invention, la charge peut comporter une silice présentant un rapport surface BET/surface CTAB compris entre 1 et 1,2.

On s'est aperçu que les silices avec les caractéristiques ci-dessus présentaient une bonne dispersibilité dans les élastomères et conféraient ainsi à ceux-ci des propriétés mécaniques intéressantes.

D'autres caractéristiques et avantages de l'invention seront mieux compris à la lecture de la description et des exemples concrets mais non limitatifs qui vont suivre.

Comme indiqué plus haut, l'application pour charges renforçantes nécessite des silices présentant des caractéristiques bien déterminées.

Ces caractéristiques sont déterminées de la manière suivante:

La surface CTAB est la surface externe appréciée par absorption de bromure de cétyl triméthyl ammonium à pH=9 selon la méthode exposée par JAY, JANSEN et C. KRAUS dans "Rubber Chemistry and Technology *44*—(1971) pages 1287—1296.

La prise d'huile est appréciée selon la méthode décrite dans la norme française NF.T 30-022 (Mars 1953) en mettant en oeuvre comme huile de phtalate de dibutyle sur 5 g de silice.

L'aire moyenne de l'agrégat a été déterminée selon la norma ASTM D 3849-80, adaptée au caractère spécifique de la silice en désagglomérant la silice par broyage d'une pâte constituée de 100 mg de poudre de silice sèche par 0,5 ml de glycérine et en diluant ensuite cette pâte dans 300 ml d'eau à pH 3.

La détermination de volume poreux inter-agrégat et la détermination de la population des pores correspondant à ce volume sont effectuées à l'aide d'un porosimètre à mercure (porosimètre utilisé: "pore sizer" 9300 de COULTRONICS). On fait pénétrer le mercure dans les pores de l'échantillon dégazé et on établit ainsi une courbe de porosité représentant l'évolution du volume des pores en fonction de la pression ou du rayon des pores. Cette courbe de porosité est établie selon la méthode exposée par N. M. WILNSLOW et J. J. SHAPIRO dans ASTM BULLETIN, page 39, Février 1959.

L'empilement des agrégats crée une porosité inter-agrégat dont le remplissage par le mercure va se traduire par l'apparition d'une marche sur la courbe de porosité. La hauteur de cette marche permet

2

d'accéder au volume poreux inter-agrégat. L'inclinaison de la marche reflète la dispersion de la population des pores. La courbe dérivé présente un aspect de pic d'autant plus fin que la population des pores inter-agrégat est plus homogène.

La surface spécifique BET est déterminée selon la méthode de BRUNAUER—EMETT—TELLER décrite dans "The Journal of the American Chemical Society", volume 60, page 309, Février 1938.

Par ailleurs, les silices utilisées selon l'invention peuvent être non microporeuses, c'est-à-dire présenter un rapport Surface BET/Surface CTAB compris entre 1 et 1,2.

Des silices utilisées selon l'invention peuvent être choisies parmi celles préparées comme décrit dans la demande de brevet français No. 84 11004.

On rappelle à ce sujet que cette demande concerne un procédé d'obtention d'une silice par réaction d'une solution aqueuse d'un silicate alcalin et d'un agent acidifiant par formation d'un pied de cuve renfermant une substance aqueuse et addition simultanée de l'agent acidifiant et de la solution de silicate alcalin. Ce procédé est caractérisé par le fait que:

a) on réalise une addition à volume constant des réactifs et que l'on soutire en continu le milieu de la réaction, de manière à obtenir dans le volume constant un colloïde sphérique de silice monodisperse en taille de diamètre et dans le soutirage un colloïde de silice polydisperse en taille de diamètre;

b) on fait réagir au moins une partie du produit obtenu en a) avec un électrolyte;

c) on consolide le produit obtenu à l'étape b) par addition d'une solution de silicate et d'un agent acidifiant.

Les silices ainsi choisies peuvent être incorporées à l'élastomère selon tout moyen connu.

Bien entendu, les silices sont utilisables selon l'invention pour tout type d'élastomères tels que, par exemple, polybutadiène, caoutchouc naturel, polyisoprène, du type EPDM, etc.

Des exemples vont maintenant être donnés.

Exemple 1

Six silices $S_1$, $S_2$, $S_3$, $S_4$, $S_5$, $S_6$ sont été testées.

Elles ont été incorporées à un élastomère SBR 1502 à raison de 50 pce. Une partie de l'échantillon a été diluée à 5 pce, le reste servant à préparer des éprouvettes d'essais mécaniques.

On a procédé d'une part à l'analyse des tailles des particules sur la fraction de mélange dilué et, d'autre part, aux essais mécaniques.

Analyse de taille des particules

Les observations sont faites sur coupes minces ($\approx$150 nm).

Compte-tenu des propriétés mécaniques des mélanges crus, ces coupes ont été réalisées à froid à l'aide d'un ultramicrotome cryogénique (REICHERT OMU 3, couteau de verre à −90°C). Les coupes recueillies par un mélange DMS/eau, mélange liquide à −90°C, lavées à l'eau et déposées sur des grilles de microscope électronique.

Les coupes sont observées avec un microscope électronique, JEOL TEMSCAN 1200 EX.

Après un premier examen en transmission conventionnelle (CTEM), les coupes sont étudiées en mode balayage en transmission (STEM) sous une tension d'accélération de 120 KV avec un grossissement de 80 000. Le mode de fonctionnement permet le transfert de l'image STEM dans une mémoire de l'analyseur d'image (Quantimet 900 de Cambridge) grâce à une interface spécifique.

La visualisation du signal vidéo sur l'un des moniteurs de l'unité du balayage permet à l'opérateur:

—d'optimiser les réglages du détecteur STEM (bruit de fond, brillance, contraste);

—de transmettre à l'analyseur d'image un signal relativement standardisé.

Analyse d'image

Après le passage du signal vidéo dans un convertisseur analogique digital et la numération par un processeur 6 bits une image est formée de 630 000 points ou pixels, chaque pixel ayant une valeur de niveaux de gain compris entre 0 et 64. Un pixel représente une surface 10,24 nm$^2$.

Compte-tenu de la qualité du signal initial, un blanc simple suivi d'une procédure de fermeture (dilatation puis érosion) et d'une procédure d'ouverture (érosion, dilatation) de 1, puis 2 pixels permet d'obtenir une image binaire représentatrice des objets présents dans le champ d'observation. Les algorithmes du logiciel d'exploitation du QTM 900 permettent alors, sur cette image:

—de dénombrer les objets présents,

—pour chacun des objets, de mesurer les paramètres de taille:

*surface: S,

*périmètre: P,

*plus grande longueur: L,

*plus petite largeur: 1,

—de calculer des paramètres de forme:

*circularité: $P^2/4\,\pi S$,

*anisotropie: L/1.

Chaque échantillon est caractérisé par une population de 3 000 objets issus d'environ 30 champs provenant de l'examen de 3 coupes différentes.

Bien que l'on puisse estimer la résolution spatiale dans les conditions de grossissement à 220 nm², on élimine les objets de taille inférieure à 500 nm² qui peuvent être des objets virtuels résultant des procédures d'analyse d'image.

L'analyse fine de la répartition en taille des particules de silice laisse apparaître une distribution bimodale. On met en évidence une première population de petites particules centrée sur la valeur de $\overline{S_1}$ et une deuxième population de particules plus grosses centrée sur $\overline{S_2}$.

Le minimum de la courbe de distribution se situe aux environs de 20 000 nm².

Les résultats des différentes mesures sont présentés dans le tableau I.

TABLEAU I

| Réf. Silice | S CTAB m²/g | Aire projetée moyenne** | Distribution 1 500—20 000 nm² | | Distribution 2 20 000—600 000 nm² | | % S* Surface |
|---|---|---|---|---|---|---|---|
| | | | $\overline{S_1}$ nm² | % en nombre $n_1$ | $\overline{S_2}$ nm₂ | % en nombre $n_2$ | |
| $S_1$ | 170 | 12 000 | 3 287 | 96,3 | 47 163 | 3,7 | 35,5 |
| $S_2$ | 160 | 15 000 | 3 317 | 97,9 | 39 676 | 2,1 | 21 |
| $S_3$ | 96 | 15 000 | 4 543 | 92,2 | 46 050 | 7,8 | 46,3 |
| $S_4$ | 98 | 25 000 | 4 305 | 94,1 | 33 795 | 5,9 | 33 |
| $S_5$ | 65 | 27 000 | 4 578 | 86,5 | 53 465 | 13,5 | 64,7 |
| $S_6$ | 65 | 32 000 | 4 649 | 89 | 39 806 | 11 | 31,5 |

*% en surface de la deuxième population.
**mesurée sur la poudre avant introduction dans l'élastomère.

Les silices $S_1$, $S_3$, $S_5$ sont des silices commerciales classiques, les silices $S_2$, $S_4$, $S_6$ sont par contre des silices choisies selon les critères de l'invention.

On constate une nette diminution du pourcentage en nombre et surtout en surface des particules de grosses tailles (distribution 2) dans le cas des silices selon l'invention. Ceci signifie une dispersion de ces silices dans l'élastomère meilleure que dans le cas des silices classiques.

Cette meilleure dispersion a par ailleurs des conséquences pour les propriétés mécaniques des vulcanisats. Ceci apparaît dans l'exemple 2 qui suit.

Exemple 2
Préparation des éprouvettes d'essais mécaniques

Les propriétés mécaniques des vulcanisats chargés dépendent à la fois de la charge et du réseau de l'élastomère.

Pour pouvoir valablement comparer les différentes charges toutes choses égales par ailleurs, on se place autant que possible dans les mêmes conditions de réticulation de l'élastomère.

Pour réduire l'effet de l'adsorption des agents de vulcanisation à la surface de la silice et par conséquent les différences de réticulation, et pour avoir un bon mouillage des particules de charge par l'élastomère on utilise comme agent couplant: le tétrasulfure de bis-propyltriéthoxysilane.

La quantité de cet agent de couplage est ajustée en fonction de la surface spécifique de la silice pour avoir, thériquement, recouvrement total de la charge.

La formule qui a été utilisée pour la préparation des éprouvettes est la suivante:

| | |
|---|---|
| —SBR 1502 | 100 |
| —ZnO | 4 |
| —Acide stéarique | 1,5 |
| —CBS (accélérateur) | 2 |
| —Soufre | 1 |
| —PEG (polyéthylèneglycol) | variable |
| —Silice | 50 |
| —Silane | variable |

Le silane et le PEG sont ajustés en fonction de la surface spécifique de la silice sur la base, respectivement, de 10 g et 2 g pour 100 g de silice à 170 m²/g.

4

Les mélanges sont réalisés en deux temps sur mélangeur ouvert:

—on incorpore d'abord de silane puis la silice pour permettre au premier de se répartir uniformément à la surface de celle-ci;

—une fois l'incorporation achevée, on ajoute les autres composants du mélange. Par ce moyen, on évite à l'accélérateur de s'adsorber à la surface de la charge et on maintient constant sa concentration dans la masse de l'élastomère.

La vulcanisation est réalisée à 160°C d'après les indications du rhéomètre MONSANTO.

Les essais mécaniques sont conduits selon les normes ASTM.

Les résultats des mesures sont regroupés dans le tableau II ci-dessous:

$R_R$: résistance à la rupture (NF T 46-002).

$R_D$: résistance au déchirement (NF T 46-007).

### TABLEAU II

| Réf. Silice | S CTAB | $R_R$ MPa | $R_D$ KN/m |
|---|---|---|---|
| $S_1$ | 170 | 22,7 | 11,7 |
| $S_2$ | 160 | 25,5 | 13,1 |
| $S_3$ | 96 | 19,6 | 10,8 |
| $S_4$ | 98 | 23,0 | 12,1 |
| $S_5$ | 65 | 18,3 | 9,8 |
| $S_6$ | 65 | 21,0 | 12,3 |

On constate que les silices choisies selon l'invention confèrent au vulcanisat une résistance à la rupture et une résistance au déchirement plus grande que dans le cas des silices classiques.

**Revendications**

1. Procédé de renforcement d'un élastomère par incorporation d'une charge dans l'élastomère caractérisé en ce que, en vue d'améliorer la dispersion de la charge dans l'élastomère, on utilise à titre de charge une silice de précipitation présentant les caractéristiques suivantes:

—une surface CTAB comprise entre 20 et 200 $m^2$/g.

—une aire projetée moyenne des agrégats supérieure à 10 000 $nm^2$.

—une prise d'huile DBP au plus de 300 ml/100 g.

—un volume inter-agrégat élevé d'au moins 1 $cm^3$/g et une population de pores inter-agrégat homogène, avec les conditions suivantes:

. pour une surface CTAB comprise entre 20 et 70 $m^2$/g, une aire projetée d'au moins 30 000 $nm^2$.

. pour une surface CTAB comprise entre 70 et 120 $m^2$/g, une aire projetée d'au moins 25 000 $nm^2$.

. pour une surface CTAB comprise entre 120 et 200 $m^2$/g, une aire projetée d'au moins 15 000 $nm^2$.

2. Procédé selon la revendication 1, caractérisé en ce qu'on utilise une silice représentant un rapport surface BET/surface CTAB compris entre 1 et 1,2.

**Patentansprüche**

1. Verfahren zur Verstärkung eines Elastomeren durch Einbau eines Füllstoffs in das Elastomere, dadurch gekennzeichnet, daß man im Hinblick auf die Verbesserung der Dispergierung des Füllstoffs im Elastomeren, einen Füllstoff wie ein gefälltes Siliziumdioxid verwendet, das die folgenden Merkmale aufweist:

—eine CTAB-Oberfläche zwischen 20 und 200 $m^2$/g,

—eine mittlere projizierte Fläche der Aggregate von größer als 10.000 $nm^2$,

—eine DPB-Ölaufnahme von höchstens 300 ml/100 g,

—ein erhöhtes Zwischenaggregat-Volumen von wenigstens 1 $cm^3$/g und eine homogene Zwischenaggregat-Porendichte mit den folgenden Eigenschaften:

. für eine CTAB-Oberfläche zwischen 20 und 70 $m^2$/g eine projizierte Fläche von wenigstens 30.000 $nm^2$,

. für eine CTAB-Oberfläche zwischen 70 und 120 $m^2$/g, eine projizierte Fläche von wenigstens 25.000 $nm^2$,

. für eine CTAB-Fläche zwischen 120 und 200 $m^2$/g, eine projizierte Fläche von wenigstnes 15.000 $nm^2$.

2. Verfahren nach Anspruch 1, dadurch gekennzeichnet, daß man ein Siliziumdioxid verwendet, das ein Verhältnis BET-Oberfläche/CTAB-Oberfläche zwischen 1 und 1,2 aufweist.

**Claims**

1. Process for reinforcing an elastomer by incorporating a filler in the elastomer, characterized in that, in order to improve the dispersion of the filler in the elastomer, the filler employed is a precipitated silica exhibiting the following characteristics:

—a CTAB surface of between 20 and 200 $m^2/g$,

—a mean projected area of aggregates higher than 10,000 $nm^2$,

—a DBP oil uptake not exceeding 300 ml/100 g,

—a high interaggregate volume of at least 1 $cm^3/g$ with a homogeneous interaggregate pore population, with the following conditions:

in the case of a CTAB surface of between 20 and 70 $m^2/g$, a projected area of at least 30,000 $nm^2$,

in the case of a CTAB surface of between 70 and 120 $m^2/g$, a projected area of at least 250,000 $nm^2$,

in the case of a CTAB surface of between 120 and 200 $m^2/g$, a projected area of at least 15,000 $nm^2$.

2. Process according to Claim 1, characterized in that a silica exhibiting a BET surface/CTAB surface ratio of between 1 and 1.2 is employed.